# EUROPEAN PATENT APPLICATION

(11) **EP 4 082 840 A1**
(43) Date of publication of application: **02.11.2022**
(21) Application number: 20906313.0
(22) Date of filing: 30.11.2020
(51) Int. Cl.: B60R 11/02, G03B 11/00, G03B 15/00, G03B 17/02, G03B 17/08, G08G 1/16, B60Q 1/00, F21V 23/00, G01S 7/481, G01S 17/93, B60S 1/62

(54) **SENSOR UNIT**

(30) Priority: 27.12.2019 JP 2019238962; 27.12.2019 JP 2019238963; 27.12.2019 JP 2019238964
(71) Applicant: KOITO MANUFACTURING CO., LTD., Minato-ku, Tokyo 108-8711 (JP)
(72) Inventor: KUBOTA Akinobu, Shizuoka-shi, Shizuoka 424-8764 (JP); HACHIYA Taishi, Shizuoka-shi, Shizuoka 424-8764 (JP)
(74) Representative: Cabinet Beau de Loménie
(86) International application number: PCT/JP2020/044548
(87) International publication number: WO 2021/131520

(57) **Abstract**

This sensor unit that is mounted on a vehicle comprises a front left LiDAR, a housing (121) that houses the front left LiDAR, and a front left sensor cleaner that is attached to the housing (121). The front left sensor cleaner has air nozzles (131, 132) that jet air at a transmissive cover (125) (surface to be cleaned) corresponding to the front left LiDAR, and a liquid nozzle (133) that jets a cleaning liquid at the transmissive cover (125). The air nozzles (131, 132) are positioned above the liquid nozzle (133). The air jetting direction from each air nozzle (131, 132) is a direction that is parallel to the horizontal direction, or a direction that is more downward-trending than the horizontal direction, and the cleaning liquid jetting direction from the liquid nozzle (133) is a direction that is more upward-trending than the horizontal direction.

## Description

### TECHNICAL FIELD

The present invention relates to a sensor unit.

### BACKGROUND ART

In recent years, development of vehicles capable of automatic driving has been attempted. In order to achieve automatic driving, for example, it is required to acquire information on outside of a vehicle using a sensor such as a LiDAR or a camera. Patent Literature 1 discloses a sensor system to be mounted on a vehicle, in which a plurality of LiDARs are built in a lamp unit.

### CITATION LIST

### PATENT LITERATURE

Patent Literature 1: WO 2018/051909

### SUMMARY OF INVENTION

### TECHNICAL PROBLEM

In a sensor system disclosed in Patent Literature 1, there is room for improvement in a direction in which a cleaning medium is jetted from a cleaner for preventing or removing dirt from a sensor.

Therefore, an object of the present invention is to provide a sensor unit including a cleaner capable of efficiently cleaning a LiDAR mounted on the sensor unit.

In addition, according to the unit disclosed in Patent Literature 1, the cleaner including a nozzle that jets the cleaning medium at a sensor surface for preventing or removing dirt on the sensor surface may be mounted on the unit. There is room for improvement in an attachment structure of the nozzle to the sensor unit.

Therefore, an object of the present invention is to provide a sensor unit capable of easily attaching and positioning a plurality of nozzles with respect to a housing.

Further, in the unit disclosed in Patent Literature 1, a plurality of types of sensors may be integrated. When light emitted from one sensor among the plurality of types of sensors is received by another sensor, sensing of the another sensor may be adversely affected.

Therefore, an object of the present invention is to provide a sensor unit capable of preventing an influence on sensing of each sensor even when a plurality of types of sensors are mounted.

### SOLUTION TO PROBLEM

In order to achieve the above object, a sensor unit according to one aspect of the present invention is a sensor unit to be mounted on a vehicle, the sensor unit includes:
a LiDAR;
a housing configured to accommodate the LiDAR; and
a cleaner attached to the housing and including a first nozzle configured to jet air at a first surface to be cleaned corresponding to the LiDAR and a second nozzle configured to jet a cleaning liquid at the first surface to be cleaned.

The first nozzle is disposed above the second nozzle,
a jetting direction of the air from the first nozzle is a direction that is parallel to a horizontal direction or a direction that is more downward-trending than the horizontal direction, and
a jetting direction of the cleaning liquid from the second nozzle is a direction that is more upward-trending than the horizontal direction.

In order to achieve the above object, a sensor unit according to another aspect of the present invention is a sensor unit to be mounted on a vehicle, the sensor unit includes:
a LiDAR;
a housing configured to accommodate the LiDAR;
a cleaner attached to the housing and including a first nozzle configured to jet air at a first surface to be cleaned corresponding to the LiDAR and a second nozzle configured to jet a cleaning liquid at the first surface to be cleaned; and
a holding member attached to the housing and configured to hold the first nozzle and the second nozzle.

The holding member is configured to position a jetting direction of the air from the first nozzle and a jetting direction of the cleaning liquid from the second nozzle.

In order to achieve the above object, a sensor unit according to still another aspect of the present invention is a sensor unit to be mounted on a vehicle, the sensor unit includes:
a LiDAR;
a camera including a light receiving portion;
a housing configured to accommodate the LiDAR and the camera.

The camera includes a transmissive cover that is disposed between a design surface of the housing forming a vehicle external appearance and the light receiving portion and has an infrared light cut filter function of cutting infrared light.

### ADVANTAGEOUS EFFECTS OF INVENTION

According to the present invention, it is possible to provide a sensor unit including a cleaner capable of efficiently cleaning a LiDAR mounted on the sensor unit.

In addition, according to the present invention, it is possible to provide a sensor unit capable of easily attaching and positioning a plurality of nozzles with respect to a housing.

Further, according to the present invention, it is possible to provide a sensor unit capable of preventing an influence on sensing of each sensor even when a plurality of types of sensors are mounted.

### BRIEF DESCRIPTION OF DRAWINGS

FIG. 1 is a top view of a vehicle equipped with a sensor system.
FIG. 2 is a block diagram of a vehicle system in which the sensor system is incorporated.
FIG. 3 is a block diagram of a cleaner unit.
FIG. 4 is a perspective view of a sensor unit according to an embodiment of the present invention.
FIG. 5 is an exploded perspective view of the sensor unit as viewed from a front side.
FIG. 6 is an exploded perspective view of an accommodating member constituting the sensor unit.
FIG. 7 is an exploded perspective view of the sensor unit as viewed from a rear side.
FIG. 8 is a view showing a state in which members shown in FIG. 7 are combined.
FIG. 9 is a front view of the sensor unit.

### DESCRIPTION OF EMBODIMENTS

Hereinafter, embodiments of the present invention will be described with reference to the drawings. Members having the same reference numerals as those already described in the description of an embodiment will be omitted for the convenience of description. In addition, dimensions of members shown in the drawings may be different from actual dimensions thereof for the convenience of description.

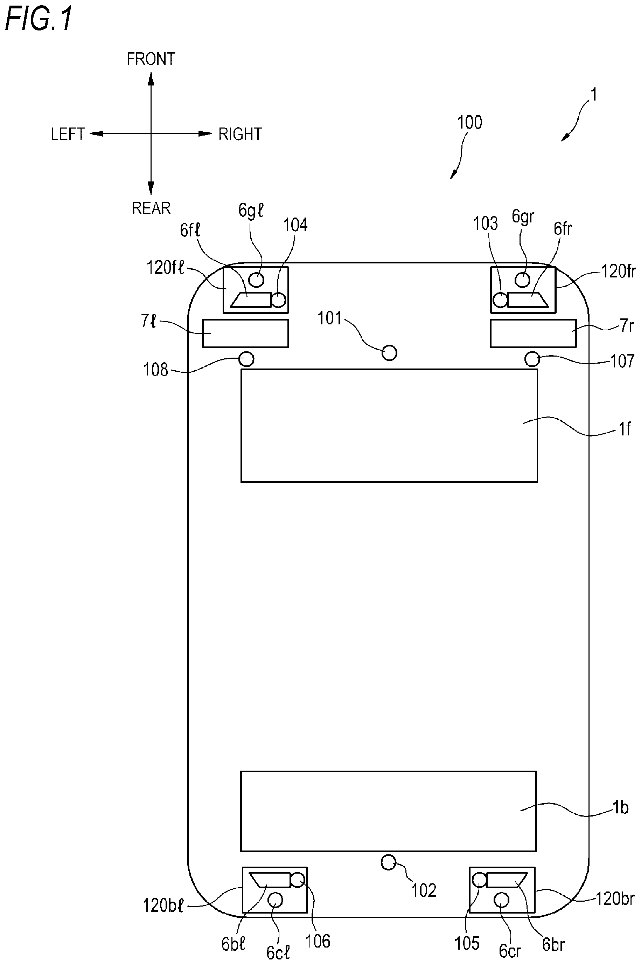

In the description of an embodiment of the present invention (hereinafter, referred to as "the present embodiment"), a "left-right direction", a "front-rear direction", and an "upper-lower direction" will be appropriately referred to for the convenience of description. These directions are relative directions set for a vehicle 1 shown in FIG. 1. Here, the "upper-lower direction" is a direction including an "upper direction" and a "lower direction". The "front-rear direction" is a direction including a "front direction" and a "rear direction". The "left-right direction" is a direction including a "left direction" and a "right direction".

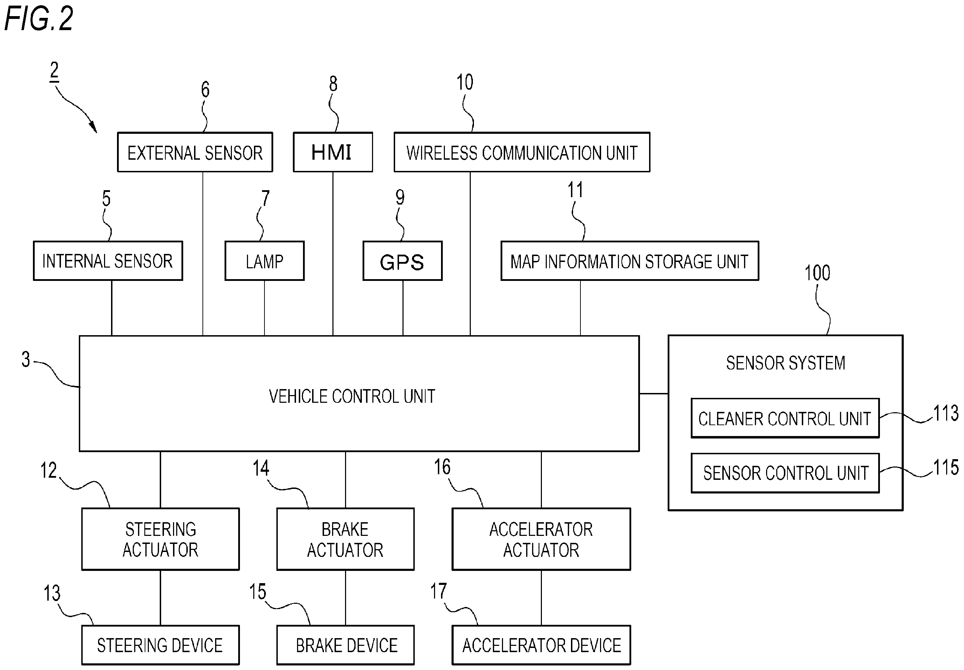

FIG. 1 is a top view of the vehicle 1 equipped with a sensor system 100 according to the present embodiment. FIG. 2 is a block diagram of a vehicle system 2 in which the sensor system 100 is incorporated. The vehicle 1 includes the sensor system 100. In the present embodiment, the vehicle 1 is an automobile that can travel in an automatic driving mode.

First, the vehicle system 2 of the vehicle 1 will be described with reference to FIG. 2.

As shown in FIG. 2, the vehicle system 2 includes a vehicle control unit 3, an internal sensor 5, an external sensor 6, a lamp 7, a human machine interface (HMI) 8, a global positioning system (GPS) 9, a wireless communication unit 10, and a map information storage unit 11. The vehicle system 2 further includes a steering actuator 12, a steering device 13, a brake actuator 14, a brake device 15, an accelerator actuator 16, and an accelerator device 17. The sensor system 100 including a cleaner control unit 113 and a sensor control unit 115 is communicably connected to the vehicle control unit 3 of the vehicle system 2.

The vehicle control unit 3 includes an electronic control unit (ECU). The vehicle control unit 3 includes a processor such as a central processing unit (CPU), a read only memory (ROM) in which various vehicle control programs are stored, and a random access memory (RAM) in which various vehicle control data are temporarily stored. The processor is configured to expand a program designated from the various vehicle control programs stored in the ROM on the RAM and execute various types of processing in cooperation with the RAM. The vehicle control unit 3 is configured to control traveling of the vehicle 1.

The internal sensor 5 is a sensor capable of acquiring information on an own vehicle. The internal sensor 5 is, for example, at least one of an acceleration sensor, a speed sensor, a wheel speed sensor, and a gyro sensor. The internal sensor 5 is configured to acquire information on the own vehicle including a traveling state of the vehicle 1 and output the information to the vehicle control unit 3. The internal sensor 5 may include a seating sensor that detects whether a driver is seated in a driver seat, a face orientation sensor that detects an orientation of a face of the driver, a human sensor that detects whether there is a person in the vehicle, and the like.

The external sensor 6 is a sensor capable of acquiring information on outside of the own vehicle. The external sensor is, for example, at least one of a camera, a radar, and a LiDAR. The external sensor 6 is configured to acquire information on the outside of the own vehicle including a surrounding environment (another vehicle, a pedestrian, a road shape, a traffic sign, an obstacle, and the like) of the vehicle 1, and output the information to the vehicle control unit 3 and the sensor control unit 115. Alternatively, the external sensor 6 may include a weather sensor that detects a weather condition, an illuminance sensor that detects an illuminance of the surrounding environment of the vehicle 1, or the like. For example, the camera is a camera including an imaging element such as a charge-coupled device (CCD) or a complementary MOS (CMOS). The camera is a camera that detects visible light or an infrared camera that detects infrared rays. The radar is a millimeter wave radar, a microwave radar, a laser radar, or the like. The LiDAR is an abbreviation for light detection and ranging or laser imaging detection and ranging. In general, the LiDAR is a sensor that emits invisible light in front of the LiDAR and acquires information such as a distance to an object, a direction of the object, a shape of the object, a material of the object, and a color of the object based on the emitted light and returned light.

The lamp 7 is at least one of a head lamp and a position lamp provided at a front portion of the vehicle 1, a rear combination lamp provided at a rear portion of the vehicle 1, a turn signal lamp provided at the front portion or a side portion of the vehicle, various lamps that notify a pedestrian or a driver of another vehicle of a situation of the own vehicle, and the like.

The HMI 8 includes an input unit that receives an input operation from the driver and an output unit that outputs traveling information or the like to the driver. The input unit includes a steering wheel, an accelerator pedal, a brake pedal, a driving mode switching switch that switches a driving mode of the vehicle 1, and the like. The output unit is a display that displays various pieces of traveling information.

The GPS 9 is configured to acquire current position information on the vehicle 1 and output the acquired current position information to the vehicle control unit 3. The wireless communication unit 10 is configured to receive traveling information on another vehicle around the vehicle 1 from the another vehicle and transmit traveling information on the vehicle 1 to the another vehicle (inter-vehicle communication). In addition, the wireless communication unit 10 is configured to receive infrastructure information from infrastructure equipment such as a traffic light or a sign lamp and transmit the traveling information on the vehicle 1 to the infrastructure equipment (road-vehicle communication). The map information storage unit 11 is an external storage device such as a hard disk drive in which map information is stored, and is configured to output the map information to the vehicle control unit 3.

When the vehicle 1 travels in an automatic driving mode, the vehicle control unit 3 automatically generates at least one of a steering control signal, an accelerator control signal, and a brake control signal based on traveling state information, surrounding environment information, current position information, map information, and the like. The steering actuator 12 is configured to receive the steering control signal from the vehicle control unit 3 and control the steering device 13 based on the received steering control signal. The brake actuator 14 is configured to receive the brake control signal from the vehicle control unit 3 and control the brake device 15 based on the received brake control signal. The accelerator actuator 16 is configured to receive the accelerator control signal from the vehicle control unit 3 and control the accelerator device 17 based on the received accelerator control signal. In this way, traveling of the vehicle 1 is automatically controlled by the vehicle system 2 in the automatic driving mode.

In contrast, when the vehicle 1 travels in a manual driving mode, the vehicle control unit 3 generates a steering control signal, an accelerator control signal, and a brake control signal according to a manual operation of the driver on the accelerator pedal, the brake pedal, and the steering wheel. In this way, since the steering control signal, the accelerator control signal, and the brake control signal are generated by the manual operation of the driver in the manual driving mode, the traveling of the vehicle 1 is controlled by the driver.

Next, the driving mode of the vehicle 1 will be described. The driving mode includes the automatic driving mode and the manual driving mode. The automatic driving mode includes a fully automatic driving mode, an advanced driving support mode, and a driving support mode. In the fully automatic driving mode, the vehicle system 2 automatically performs all traveling control including steering control, brake control, and accelerator control, and the driver cannot drive the vehicle 1. In the advanced driving support mode, the vehicle system 2 automatically performs all traveling control including the steering control, the brake control, and the accelerator control, and the driver can drive the vehicle 1 but does not drive the vehicle 1. In the driving support mode, the vehicle system 2 automatically performs some traveling control among the steering control, the brake control, and the accelerator control, and the driver drives the vehicle 1 under driving support of the vehicle system 2. In contrast, in the manual driving mode, the vehicle system 2 does not automatically perform traveling control, and the driver drives the vehicle 1 without the driving support of the vehicle system 2.

The driving mode of the vehicle 1 may be switched by operating a driving mode switching switch. In this case, the vehicle control unit 3 switches the driving mode of the vehicle 1 among the four driving modes (the fully automatic driving mode, the advanced driving support mode, the driving support mode, and the manual driving mode) according to an operation of the driver on the driving mode switching switch. In addition, the driving mode of the vehicle 1 may be automatically switched based on information on a traveling permitted section where an automatic driving vehicle can travel or on a traveling prohibited section where traveling of the automatic driving vehicle is prohibited, or information on an external weather condition. In this case, the vehicle control unit 3 switches the driving mode of the vehicle 1 based on such information. Further, the driving mode of the vehicle 1 may be automatically switched by using the seating sensor, the face orientation sensor, or the like. In this case, the vehicle control unit 3 switches the driving mode of the vehicle 1 based on an output signal from the seating sensor or the face orientation sensor.

Returning to FIG. 1, the vehicle 1 includes, as the external sensor 6, a right front LiDAR 6fr, a left front LiDAR 6fl, a right rear LiDAR 6br, a left rear LiDAR 6bl, a right front camera 6gr, a left front camera 6gl, a right rear camera 6cr, and a left rear camera 6cl. The right front LiDAR 6fr, the right front camera 6gr, the left front LiDAR 6fl, and the left front camera 6gl are configured to acquire information ahead of the vehicle 1. The right rear LiDAR 6br, the right rear camera 6cr, the left rear LiDAR 6bl, and the left rear camera 6cl are configured to acquire information behind the vehicle 1.

In an example shown in FIG. 1, two sets of the LiDAR and the camera are provided in each of the front portion and the rear portion of the vehicle 1, but for example, one set of the LiDAR and the camera may be provided in each of a central portion of the front portion and a central portion of the rear portion of the vehicle 1. The external sensor 6 is provided at each of the front portion and the rear portion of the vehicle 1, but may be provided, for example, at each of left and right side portions of the vehicle 1. The right front LiDAR 6fr, the right front camera 6gr, the left front LiDAR 6fl, and the left front camera 6gl are provided in the front portion of the vehicle 1, and the right rear LiDAR 6br, the right rear camera 6cr, the left rear LiDAR 6bl, and the left rear camera 6cl are provided in the rear portion of the vehicle 1, but the present invention is not limited thereto. For example, the right front LiDAR 6fr, the right front camera 6gr, the left front LiDAR 6fl, the left front camera 6gl, the right rear LiDAR 6br, the right rear camera 6cr, the left rear LiDAR 6bl, and the left rear camera 6cl may be collectively disposed on a ceiling portion of the vehicle 1.

The vehicle 1 includes a right headlamp 7r and a left headlamp 71 as the lamp 7. The right headlamp 7r is provided at a right portion of the front portion of the vehicle 1, and the left headlamp 71 is provided at a left portion of the front portion of the vehicle 1.

The vehicle 1 includes a front window 1f and a rear window 1b.

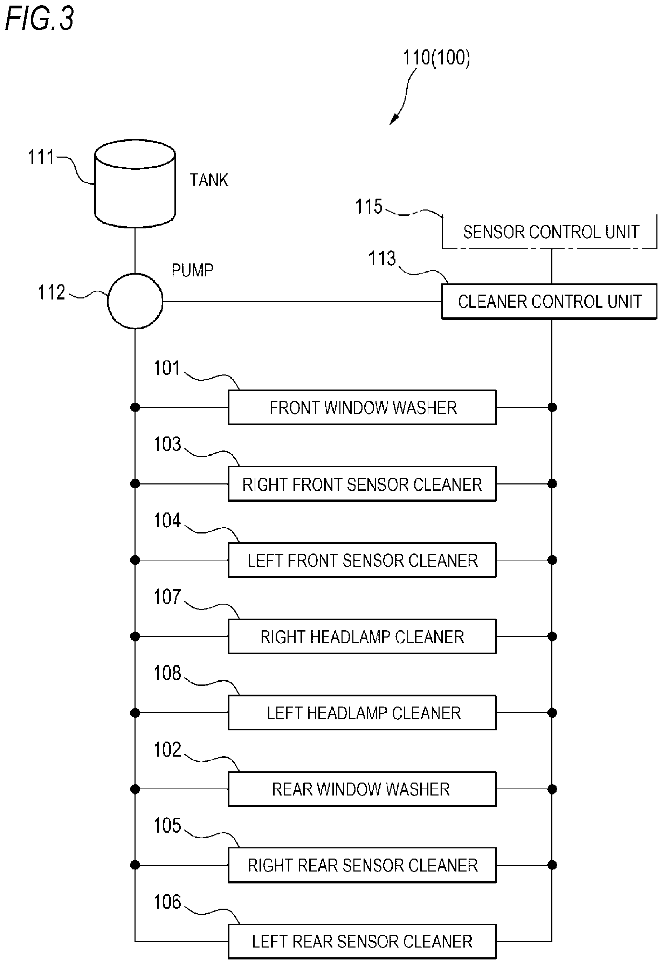

The sensor system 100 mounted on the vehicle 1 includes a cleaner unit 110 that removes foreign matters such as water droplets, mud, and dust adhering to an object or prevents the foreign matters from adhering to the object (described in detail with reference to FIG. 3). For example, in the present embodiment, the cleaner unit 110 includes a front window washer (hereinafter, referred to as a front WW) 101 capable of cleaning the front window 1f and a rear window washer (hereinafter, referred to as a rear WW) 102 capable of cleaning the rear window 1b. The cleaner unit 110 includes a right front sensor cleaner (hereinafter, referred to as a right front SC) 103 capable of cleaning the right front LiDAR 6fr and the right front camera 6gr, and a left front sensor cleaner (hereinafter, referred to as a left front SC) 104 capable of cleaning the left front LiDAR 6fl and the left front camera 6gl. The cleaner unit 110 includes a right rear sensor cleaner (hereinafter, referred to as a right rear SC) 105 capable of cleaning the right rear LiDAR 6br and the right rear camera 6cr, and a left rear sensor cleaner (hereinafter, referred to as a left rear SC) 106 capable of cleaning the left rear LiDAR 6bl and the left rear camera 6cl. The cleaner unit 110 includes a right headlamp cleaner (hereinafter, referred to as a right HC) 107 capable of cleaning the right headlamp 7r and a left headlamp cleaner (hereinafter, referred to as a left HC) 108 capable of cleaning the left headlamp 71. Each of the cleaners 101 to 108 includes one or more nozzles, and jets a cleaning medium such as a cleaning liquid or air from the nozzle at an object.

FIG. 3 is a block diagram of the cleaner unit 110 provided in the sensor system 100. The cleaner unit 110 includes a tank 111, a pump 112, and the cleaner control unit 113 in addition to the cleaners 101 to 108.

The front WW 101, the rear WW 102, the right front SC 103, the left front SC 104, the right rear SC 105, the left rear SC 106, the right HC 107, and the left HC 108 are connected to the tank 111 via the pump 112. The pump 112 sucks a cleaning liquid stored in the tank 111, and transfers the cleaning liquid to the front WW 101, the rear WW 102, the right front SC 103, the left front SC 104, the right rear SC 105, the left rear SC 106, the right HC 107, and the left HC 108.

Each of the cleaners 101 to 108 is provided with an actuator (not shown) that opens the nozzle to jet the cleaning liquid at an object to be cleaned. The actuator provided in each of the cleaners 101 to 108 are electrically connected to the cleaner control unit 113. The pump 112 is also electrically connected to the cleaner control unit 113. Operations of the cleaners 101 to 108, the pump 112, and the like are controlled by the cleaner control unit 113. The cleaner control unit 113 is electrically connected to the vehicle control unit 3. Information acquired by the cleaner control unit 113 and information acquired by the vehicle control unit 3 are transmitted and received between the cleaner control unit 113 and the vehicle control unit 3. In the present embodiment, the vehicle control unit 3 and the cleaner control unit 113 are provided as separate configurations, but the vehicle control unit 3 and the cleaner control unit 113 may be integrally configured.

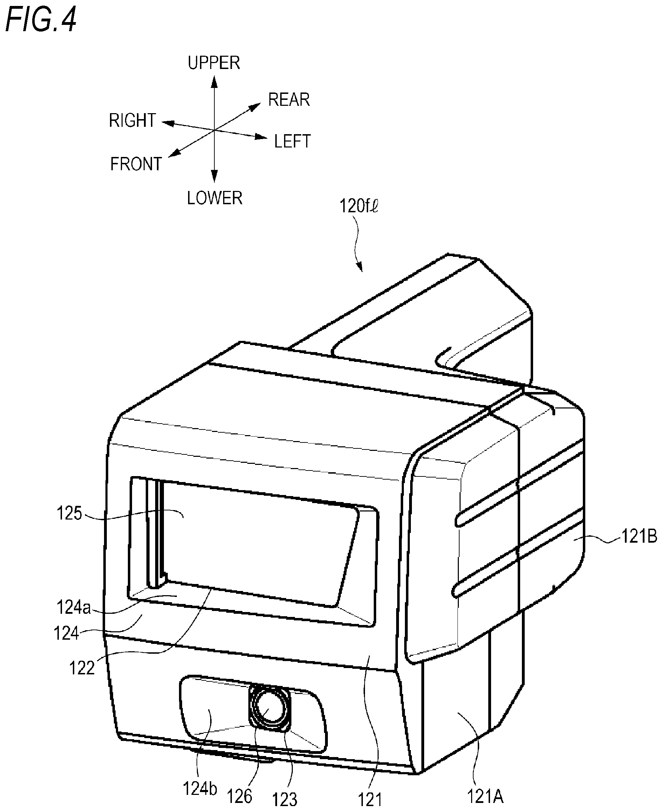

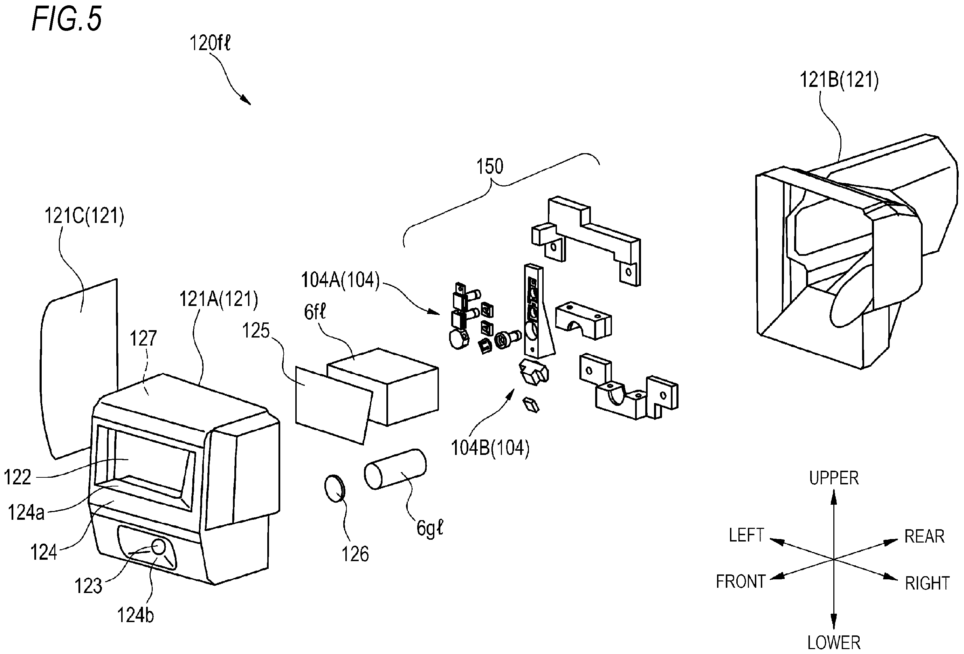

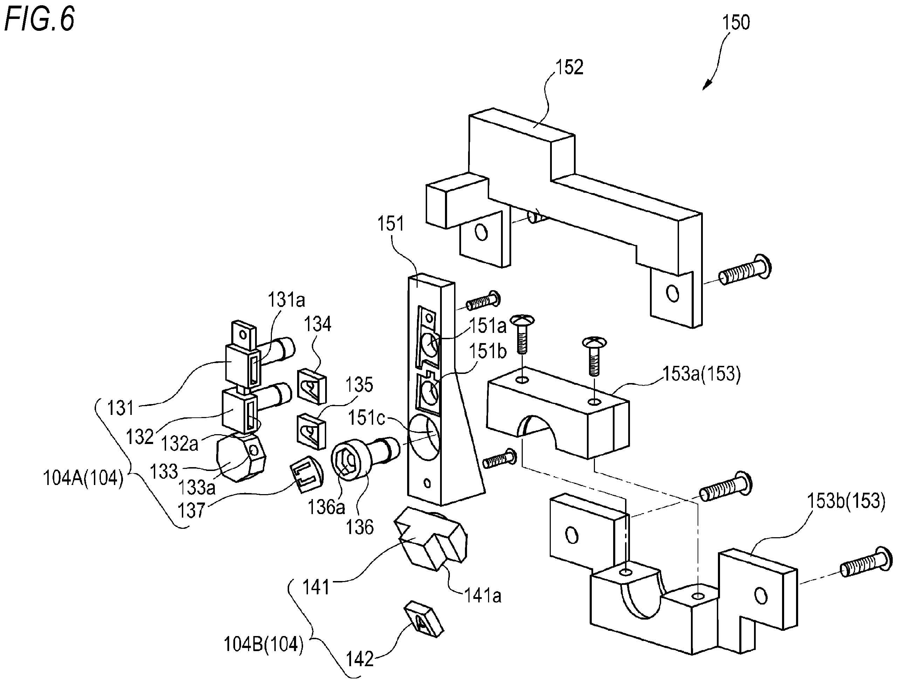

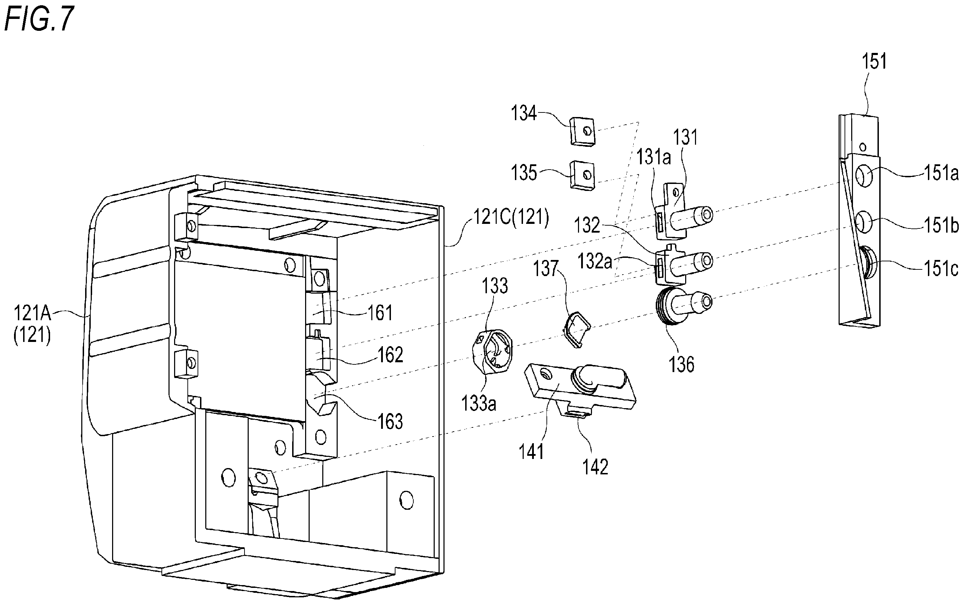

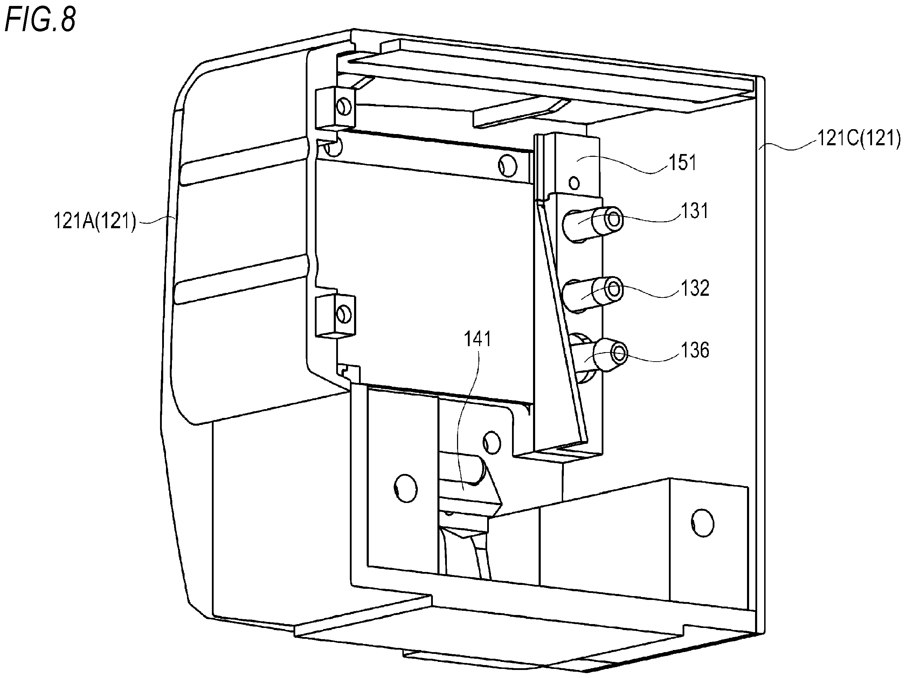

FIG. 4 is a perspective view showing a sensor unit according to the present embodiment. FIG. 5 is an exploded perspective view of the sensor unit as viewed from a front side. FIG. 6 is an exploded perspective view of an accommodating member accommodated in a housing of the sensor unit. FIG. 7 is an exploded perspective view of the sensor unit as viewed from a rear side. FIG. 8 is a view showing a state in which members shown in FIG. 7 are combined.

The sensor unit according to the present embodiment is configured as a unit in which a sensor such as a LiDAR or a camera and a cleaner that cleans the sensor are integrated. In an example to be described below, among a plurality of sensor units provided in the sensor system 100, a left front sensor unit 120fl provided at a left front portion of the vehicle 1 will be described. As shown in FIG. 1, the vehicle 1 includes, in addition to the left front sensor unit 120fl provided at the left front portion of the vehicle 1, a right front sensor unit 120fr provided at a right front portion of the vehicle 1, a right rear sensor unit 120br provided at a right rear portion of the vehicle 1, and a left rear sensor unit 120bl provided at a left rear portion of the vehicle 1. The right front sensor unit 120fr, the right rear sensor unit 120br, and the left rear sensor unit 120bl have configurations same as that of the left front sensor unit 120fl, and thus description thereof will be omitted.

As shown in FIGS. 4 and 5, the left front sensor unit 120fl includes a housing 121, a left front LiDAR 6fl, a left front camera 6gl, a left front LiDAR cleaner 104A, and a left front camera cleaner 104B. The left front LiDAR cleaner 104A and the left front camera cleaner 104B are cleaners constituting the left front SC 104.

The housing 121 is made of, for example, synthetic resin, and is formed in a substantially box shape. The housing 121 includes a front case 121A, a rear case 121B attached to a rear portion of the front case 121A, and a plate 121C attached to a left side portion of the front case 121A.

An upper portion opening 122 and a lower portion opening 123 are formed in a front surface 124 of the front case 121A (a design surface forming a vehicle external appearance). The upper portion opening 122 is formed in a recess 124a provided in the front surface 124. The lower portion opening 123 is formed in a recess 124b provided in the front surface 124. The upper portion opening 122 is formed above the lower portion opening 123. A side portion opening 127 is formed in the left side portion of the front case 121A. The plate 121C is attached to the front case 121A so as to cover the side portion opening 127.

The upper portion opening 122 is formed to have a size that covers a front surface area of the left front LiDAR 6fl accommodated in the housing 121. The upper portion opening 122 is formed in a horizontally long rectangular shape that is long in the left-right direction. For example, the upper portion opening 122 is formed in a horizontally long trapezoidal shape in which a width in the left-right direction decreases from an upper side toward a lower side. The lower portion opening 123 is formed to have a size that covers a front surface area of the left front camera 6gl accommodated in the housing 121. The lower portion opening 123 is formed in, for example, a circular shape.

The left front LiDAR 6fl and the left front camera 6gl are accommodated in a space formed by combining the front case 121A, the rear case 121B, and the plate 121C. In the space, the left front LiDAR 6fl is disposed above the left front camera 6gl.

A transmissive cover 125 is attached to the upper portion opening 122 formed in the recess 124a of the front case 121A so as to cover the upper portion opening 122 without a gap. The transmissive cover 125 is formed of, for example, a transparent or translucent synthetic resin. The transmissive cover 125 is formed in a horizontally long rectangular shape that is long in the left-right direction. For example, the transmissive cover 125 is formed in a horizontally long trapezoidal shape in which a width in the left-right direction decreases from an upper side toward a lower side. The transmissive cover 125 is attached so as to extend in a direction inclined with respect to a plane orthogonal to an optical axis of the left front LiDAR 6fl accommodated in the housing 121. The transmissive cover 125 is attached so as to be inclined to enter toward a back side (rear side) of the housing 121 from the upper side toward the lower side. The transmissive cover 125 is attached so as to cover the front surface area of the left front LiDAR 6fl by covering the upper portion opening 122. The transmissive cover 125 is attached so as to cover the front surface area of the left front LiDAR 6fl, and thus is configured as an example of a surface to be cleaned corresponding to the left front LiDAR 6fl of the left front sensor unit 120fl.

A transmissive cover 126 is attached to the lower portion opening 123 formed in the recess 124b of the front case 121A so as to cover the lower portion opening 123 without a gap. The transmissive cover 126 has an infrared light cut filter function of cutting infrared light. The transmissive cover 126 is formed in, for example, a circular shape. The transmissive cover 126 is attached so as to cover the front surface area of the left front camera 6gl accommodated in the housing 121 by covering the lower portion opening 123. The transmissive cover 126 is disposed between the front surface 124 of the front case 121A of the housing 121 constituting the vehicle external appearance and a light receiving portion of the left front camera 6gl. The transmissive cover 126 is attached so as to cover the front surface area of the left front camera 6gl, and thus is configured as a surface to be cleaned corresponding to the left front camera 6gl of the left front sensor unit 120fl.

The left front LiDAR cleaner 104A is a cleaner capable of cleaning, with a cleaning medium, the surface to be cleaned corresponding to the left front LiDAR 6fl, that is, the transmissive cover 125 covering the front surface area of the left front LiDAR 6fl. The left front camera cleaner 104B is a cleaner capable of cleaning, with a cleaning medium, the surface to be cleaned corresponding to the left front camera 6gl, that is, the transmissive cover 126 covering the front surface area of the left front camera 6gl.

As shown in FIGS. 6 to 8, an accommodating member 150 accommodated in the housing 121 includes a nozzle holding member 151, a LiDAR holding member 152, a camera holding member 153, and the like in addition to the left front LiDAR cleaner 104A and the left front camera cleaner 104B.

The left front LiDAR cleaner 104A includes air nozzles 131, 132 (examples of a first nozzle) capable of jetting air and a liquid nozzle 133 (an example of a second nozzle) capable of jetting a cleaning liquid, at the transmissive cover 125 that is the surface to be cleaned corresponding to the left front LiDAR 6fl.

The air nozzle 131 has a jetting opening 131a for jetting air. An air tip 134 for diffusing the air jetted from the air nozzle 131 is attached to the jetting opening 131a. The air nozzle 132 has a jetting opening 132a for jetting air. An air tip 135 for diffusing the air jetted from the air nozzle 132 is attached to the jetting opening 132a.

The liquid nozzle 133 has a jetting opening 133a for jetting a cleaning liquid. A connection portion 136 for feeding the cleaning liquid to the liquid nozzle 133 is connected to the liquid nozzle 133. An opening 136a is formed in the connection portion 136. A liquid tip 137 for diffusing the cleaning liquid jetted from the liquid nozzle 133 is attached to the opening 136a. The liquid tip 137 is attached to the opening 136a of the connection portion 136, and the connection portion 136 is connected to the liquid nozzle 133, so that the liquid tip 137 is accommodated in the jetting opening 133a of the liquid nozzle 133. For example, the liquid nozzle 133 may be a fluidic type nozzle (swing jetting nozzle) that changes a jetting direction of a fluid by causing fluids flowing inside the nozzle to interfere with each other.

The nozzle holding member 151 is a member that holds the air nozzles 131, 132 and the liquid nozzle 133. A holding hole 151a for holding the air nozzle 131, a holding hole 151b for holding the air nozzle 132, and a holding hole 151c for holding the liquid nozzle 133 are formed in the nozzle holding member 151. The nozzle holding member 151 is fixed to the front case 121A by, for example, screwing. A holding groove 161 for holding the air nozzle 131, a holding groove 162 for holding the air nozzle 132, and a holding groove 163 for holding the liquid nozzle 133 are formed in the front case 121A (see FIG. 7).

The air nozzles 131, 132 and the liquid nozzle 133 are held by the holding holes 151a, 151b, 151c and the holding grooves 161, 162, 163, respectively, so that the jetting openings 131a, 132a, 133a of the respective nozzles are positioned in predetermined directions. In the positioned air nozzles 131, 132 and the liquid nozzle 133, the nozzle holding member 151 is fixed to the front case 121A, so that a jetting direction of the air from the air nozzles 131, 132 and a jetting direction of the cleaning liquid from the liquid nozzle 133 at the transmissive cover 125 that is the surface to be cleaned are determined.

The left front camera cleaner 104B includes an air nozzle 141 (an example of a third nozzle) capable of jetting air at the transmissive cover 126 that is the surface to be cleaned corresponding to the left front camera 6gl. The air nozzle 141 has a jetting opening 141a for jetting air. An air tip 142 for diffusing the air jetted from the air nozzle 141 is attached to the jetting opening 141a.

In the present embodiment, an air nozzle capable of jetting air is provided as a nozzle for jetting a cleaning medium to the transmissive cover 126 that is the surface to be cleaned corresponding to the left front camera 6gl, but the present invention is not limited thereto. For example, a liquid nozzle capable of jetting a cleaning liquid or a gas-liquid nozzle capable of selectively jetting a cleaning liquid and air may be provided as the nozzle.

The LiDAR holding member 152 is a member that holds the left front LiDAR 6fl. The LiDAR holding member 152 is attached to the front case 121A by, for example, screwing. The left front LiDAR 6fl is held by the LiDAR holding member 152 from a rear side and is fixed to the front case 121A by attaching the LiDAR holding member 152 to the front case 121A.

The camera holding member 153 is a member that holds the left front camera 6gl, and includes an upper side holding member 153a and a lower side holding member 153b. The upper side holding member 153a is, for example, screwed to the lower side holding member 153b to hold the left front camera 6gl from above. The lower side holding member 153b holds the left front camera 6gl from below by screwing the upper side holding member 153a to the lower side holding member 153b. The lower side holding member 153b is attached to the front case 121A by, for example, screwing. The left front camera 6gl is fixed to the front case 121A by attaching the lower side holding member 153b to the front case 121A.

Although not shown, the left front LiDAR cleaner 104A and the left front camera cleaner 104B are electrically connected to the cleaner control unit 113. The air nozzles 131, 132 of the left front LiDAR cleaner 104A are connected to a high-pressure air supply device capable of sending high-pressure air or an air blower capable of continuously blowing air via a hose. The liquid nozzle 133 of the left front LiDAR cleaner 104A is connected to a pump 112 capable of transferring the cleaning liquid in the tank 111 via a hose. Similarly to the air nozzles 131, 132 of the left front LiDAR cleaner 104A, the air nozzle 141 of the left front camera cleaner 104B is connected to a high-pressure air supply device or an air blower via a hose. Operations of the left front LiDAR cleaner 104A and the left front camera cleaner 104B are controlled by the cleaner control unit 113. For example, the cleaner control unit 113 operates the left front LiDAR cleaner 104A and the left front camera cleaner 104B based on a contamination state information of the surface to be cleaned (the transmissive covers 125, 126) determined by the sensor control unit 115, and cleans the surface to be cleaned.

The left front LiDAR 6fl and the left front camera 6gl are electrically connected to the sensor control unit 115. Operations of the left front LiDAR 6fl and the left front camera 6gl are controlled by the sensor control unit 115. The sensor control unit 115 receives distance information, direction information, and the like related to an object around the vehicle acquired by the left front LiDAR 6fl from the left front LiDAR 6fl. In addition, the sensor control unit 115 receives image information, distance information, and the like related to an object around the vehicle acquired by the left front camera 6gl from the left front camera 6gl. The sensor control unit 115 determines contamination states of the transmissive cover 125 that is the surface to be cleaned corresponding to the left front LiDAR 6fl and the transmissive cover 126 that is the surface to be cleaned corresponding to the left front camera 6gl, based on the respective pieces of information received from the left front LiDAR 6fl and the left front camera 6gl. The sensor control unit 115 may be provided outside the housing 121 or may be provided inside the housing 121.

The sensor control unit 115 is electrically connected to the cleaner control unit 113. Information acquired by the sensor control unit 115 and information acquired by the cleaner control unit 113 are transmitted and received between the sensor control unit 115 and the cleaner control unit 113. The sensor control unit 115 is electrically connected to the vehicle control unit 3. Information acquired by the sensor control unit 115 and information acquired by the vehicle control unit 3 are transmitted and received between the sensor control unit 115 and the vehicle control unit 3. In the present embodiment, the cleaner control unit 113, the sensor control unit 115, and the vehicle control unit 3 are provided as separate configurations, but the cleaner control unit 113, the sensor control unit 115, and the vehicle control unit 3 may be integrally configured. In addition, some of these control units may be integrally configured.

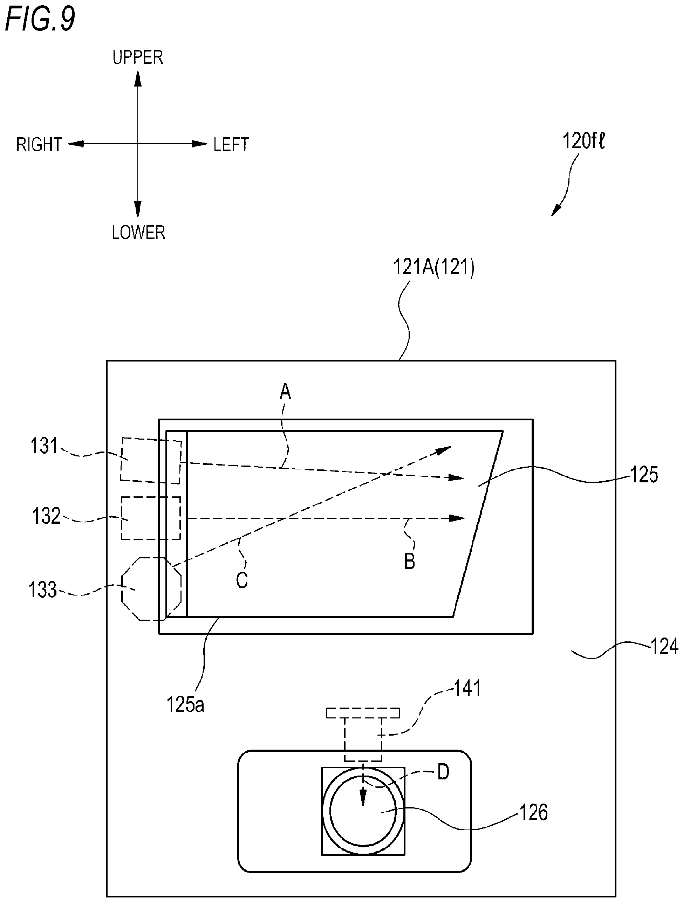

FIG. 9 is a front view of the left front sensor unit 120fl. As shown in FIG. 9, the air nozzles 131, 132 and the liquid nozzle 133 for cleaning the transmissive cover 125 that is the surface to be cleaned corresponding to the left front LiDAR 6fl are provided in an upper right side portion of the front case 121A. The air nozzles 131, 132 and the liquid nozzle 133 are arranged in parallel in the upper-lower direction along a right short side 125a of the transmissive cover 125 having the horizontally long rectangular shape. The air nozzles 131, 132 are disposed above the liquid nozzle 133. In an example shown in FIG. 9, the air nozzle 131 is disposed at the uppermost portion, the air nozzle 132 is disposed below the air nozzle 131, and the liquid nozzle 133 is disposed at the lowermost portion that is below the air nozzle 132. In the present embodiment, two air nozzles 131, 132 are provided as air nozzles, but the number of air nozzles is not limited thereto. The number of air nozzles may be, for example, one, or three or more. The number of the liquid nozzles 133 may be two or more.

The air nozzles 131, 132 and the liquid nozzle 133 are provided so as to jet the cleaning medium (air and cleaning liquid) from a right side to a left side of the left front sensor unit 120fl. That is, the air nozzles 131, 132 and the liquid nozzle 133 are provided so as to jet the cleaning medium from an inner side (central side) toward an outer side (side portion side) of the vehicle 1.

The air nozzle 131 is provided such that a jetting direction of the air jetted from the air nozzle 131 is slightly more downward-trending than a horizontal direction as indicated by an arrow A. The air nozzle 132 is provided such that a jetting direction of the air jetted from the air nozzle 132 is parallel to the horizontal direction as indicated by an arrow B. The liquid nozzle 133 is provided such that a jetting direction of the cleaning liquid jetted from the liquid nozzle 133 is a direction more upward-trending than the horizontal direction as indicated by an arrow C.

The air nozzle 141 for cleaning the transmissive cover 126 that is the surface to be cleaned corresponding to the left front camera 6gl is provided in a lower central portion of the front case 121A. The air nozzle 141 is disposed above the circular transmissive cover 126. The air nozzle 141 is provided such that a jetting direction of the air jetted from the air nozzle 141 is substantially toward a central portion of the transmissive cover 126 as indicated by an arrow D. A position where the air nozzle 141 is disposed is not limited to above the transmissive cover 126, and may be, for example, on a lateral side of the transmissive cover 126 (a right side in a case of the left front camera 6gl).

As described above, the left front sensor unit 120fl according to the present embodiment includes the left front LiDAR 6fl, the housing 121 that accommodates the left front LiDAR 6fl, and the left front LiDAR cleaner 104A that is attached to the housing 121 and includes the air nozzles 131, 132 that jet air at the transmissive cover 125 that is a surface to be cleaned (an example of a first surface to be cleaned) corresponding to the left front LiDAR 6fl, and the liquid nozzle 133 that jets a cleaning liquid at the transmissive cover 125. The air nozzles 131, 132 are disposed above the liquid nozzle 133, a direction in which the air is jetted from the air nozzles 131, 132 is parallel to a horizontal direction or more downward-trending than the horizontal direction, and a direction in which the cleaning liquid is jetted from the liquid nozzle 133 is more upward-trending than the horizontal direction. Between a case where a cleaning medium jetted from the nozzle is the air and a case where a cleaning medium jetted from the nozzle is the cleaning liquid, the case where the cleaning medium jetted from the nozzle is the air is more likely to be affected by running wind, gravity, or the like. Therefore, for example, when the cleaning medium is to be jetted to a predetermined point, it is possible to jet the cleaning liquid from below to above more accurately than to jet the air from below to above against the running wind and gravity. Therefore, as in the above configuration, the air nozzles 131, 132 that jet the air are disposed above the liquid nozzle 133 that jets the cleaning liquid, the jetting direction of the air jetted from the air nozzles 131, 132 is set to the horizontal direction or the direction more downward-trending than the horizontal direction, and the jetting direction of the cleaning liquid jetted from the liquid nozzle 133 is set to the direction more upward-trending than the horizontal direction, so that the air can be appropriately jetted to the transmissive cover 125. Therefore, according to the left front sensor unit 120fl, the left front LiDAR 6fl mounted on the left front sensor unit 120fl can be efficiently cleaned.

In the present embodiment, the left front sensor unit 120fl further includes the nozzle holding member 151 that is attached to the housing 121 and holds the air nozzles 131, 132 and the liquid nozzle 133. The nozzle holding member 151 is configured to position the jetting direction of the air from the air nozzles 131, 132 and the jetting direction of the cleaning liquid from the liquid nozzle 133. According to this configuration, the air nozzles 131, 132 and the liquid nozzle 133 are inserted into the holding holes 151a, 151b, 151c of the nozzle holding member 151, respectively, and the nozzle holding member 151 is fixed to the front case 121A, whereby each nozzle can be attached in a predetermined direction. Therefore, the plurality of nozzles can be easily attached and easily positioned with respect to the housing 121.

In the present embodiment, the nozzle holding member 151 is attached to the housing 121 such that the air jetted from the air nozzles 131, 132 and the cleaning liquid jetted from the liquid nozzle 133 flow from an inner side (central side) toward an outer side (side portion side) of the vehicle 1. According to this configuration, since the air and the cleaning liquid can be jetted in the jetting direction not against the running wind, a cleaning effect can be improved.

In the present embodiment, the transmissive cover 125 that is the surface to be cleaned corresponding to the left front LiDAR 6fl is formed in a horizontally long rectangular shape, and the nozzle holding member 151 is attached to the housing 121 such that the air nozzles 131, 132 and the liquid nozzle 133 are disposed along the right short side 125a of the transmissive cover 125. When a cleaning medium is jetted from one nozzle, the cleaning medium can be usually jetted at a wider area in a front direction than in an upper-lower direction. Therefore, by disposing the air nozzles 131, 132 and the liquid nozzle 133 along the short side with respect to the transmissive cover 125 having the horizontally long rectangular shape as in the above configuration, the number of nozzles mounted on the left front sensor unit 120fl can be reduced as compared with a case where these nozzles are disposed along a long side of the transmissive cover 125.

In the present embodiment, a plurality of air nozzles (for example, two air nozzles 131, 132) are arranged in parallel along the right short side 125a of the transmissive cover 125. According to this configuration, since the transmissive cover 125 can be cleaned by the plurality of air nozzles, a cleaning effect by the air can be enhanced. Therefore, dirt that cannot be completely cleaned by only the air jetted from a single air nozzle can be cleaned by the air jetted from the plurality of air nozzles, and the number of times of cleaning by the liquid nozzle 133 can be reduced, so that water of the cleaning liquid can be saved.

In the present embodiment, the left front camera 6gl disposed below the left front LiDAR 6fl is further provided, and the left front camera cleaner 104B includes the air nozzle 141 capable of jetting air at the transmissive cover 126 that is a surface to be cleaned (an example of a second surface to be cleaned) corresponding to the left front camera 6gl. According to this configuration, it is possible to efficiently clean the left front sensor unit 120fl in which the left front LiDAR 6fl and the left front camera 6gl are integrated. That is, by providing a function of cleaning the transmissive cover 126 of the left front camera 6gl, it is possible to remove dirt adhering to the transmissive cover 126 or to prevent dirt from adhering to the transmissive cover 126. Accordingly, it is possible to prevent an adverse effect of dirt on a captured image acquired by the left front camera 6gl.

In the present embodiment, the left front camera 6gl includes the transmissive cover 126 that is disposed between a design surface (front surface 124) of the housing 121 forming a vehicle external appearance and a light receiving portion of the left front camera 6gl and has an infrared light cut filter function of cutting infrared light. According to this configuration, even when the left front LiDAR 6fl and the left front camera 6gl are disposed close to each other in one housing 121, it is possible to prevent reflected light of infrared light emitted from the left front LiDAR 6fl from entering the light receiving portion of the left front camera 6gl by the transmissive cover 126. Accordingly, it is possible to prevent an adverse effect of the infrared light from the left front LiDAR 6fl on the captured image acquired by the left front camera 6gl.

In the present embodiment, the transmissive cover 126 is disposed in the recess 124b formed in the design surface (front surface 124). According to this configuration, since the transmissive cover 126 covering a front surface area of the left front camera 6gl is provided in a state of being retracted toward a back side, even when the left front camera 6gl and the left front LiDAR 6fl are disposed close to each other in the same housing 121, it is possible to prevent the infrared light emitted from the left front LiDAR 6fl from being directly incident on the light receiving portion of the left front camera 6gl.

Although the embodiment of the present invention have been described above, it is needless to say that the technical scope of the present invention should not be interpreted as being limited by the description of the embodiment. It is to be understood by those skilled in the art that the embodiment is merely an example and various modifications may be made within the scope of the invention described in the claims. The technical scope of the present invention should be determined based on the scope of the invention described in the claims and an equivalent scope thereof.

Although an example in which the left front sensor unit 120fl is mounted on a vehicle capable of automatic driving has been described in the above-described embodiment, the left front sensor unit 120fl may be mounted on a vehicle incapable of automatic driving.

In addition, in the above-described embodiment, in the left front sensor unit 120fl, the left front LiDAR 6fl is disposed above, and the left front camera 6gl is disposed below the left front LiDAR 6fl, but the present invention is not limited to this example. For example, the left front camera 6gl may be disposed above, and the left front LiDAR 6fl may be disposed below the left front camera 6gl.

The cleaning liquid jetted from the liquid nozzle 133 of the left front LiDAR 6fl contains water or a detergent. Cleaning media jetted at the front and rear windows 1f, 1b, the headlamps 71, 7r, the LiDARs 6fl, 6fr, 6bl, 6br, and the cameras 6gl, 6gr, 6cl, 6cr may be different from each other or may be the same.

The present application is based on Japanese Patent Application No. 2019-238962 filed on December 27, 2019, Japanese Patent Application No. 2019-238963 filed on December 27, 2019, and Japanese Patent Application No. 2019-238964 filed on December 27, 2019.

## Claims

1. A sensor unit to be mounted on a vehicle, the sensor unit comprising:
a LiDAR;
a housing configured to accommodate the LiDAR; and
a cleaner attached to the housing and including a first nozzle configured to jet air at a first surface to be cleaned corresponding to the LiDAR and a second nozzle configured to jet a cleaning liquid at the first surface to be cleaned,
wherein the first nozzle is disposed above the second nozzle,
wherein a jetting direction of the air from the first nozzle is a direction that is parallel to a horizontal direction or a direction that is more downward-trending than the horizontal direction, and
wherein a jetting direction of the cleaning liquid from the second nozzle is a direction that is more upward-trending than the horizontal direction.

2. The sensor unit according to claim 1,
wherein the first nozzle and the second nozzle are disposed so as to jet the air and the cleaning liquid from an inner side toward an outer side of the vehicle.

3. The sensor unit according to claim 1 or 2,
wherein the first surface to be cleaned has a horizontally long rectangular shape, and the first nozzle and the second nozzle are disposed along a short side of the first surface to be cleaned.

4. A sensor unit to be mounted on a vehicle, the sensor unit comprising:
a LiDAR;
a housing configured to accommodate the LiDAR; and
a cleaner attached to the housing and including a first nozzle configured to jet air at a first surface to be cleaned corresponding to the LiDAR and a second nozzle configured to jet a cleaning liquid at the first surface to be cleaned; and
a holding member attached to the housing and configured to hold the first nozzle and the second nozzle,
wherein the holding member is configured to position a jetting direction of the air from the first nozzle and a jetting direction of the cleaning liquid from the second nozzle.

5. The sensor unit according to claim 4,
wherein the first nozzle is attached to the holding member so as to be disposed above the second nozzle.

6. The sensor unit according to claim 5,
wherein the first nozzle is attached to the holding member such that the jetting direction of the air is a direction parallel to a horizontal direction or a direction more downward-trending than the horizontal direction, and
wherein the second nozzle is attached to the holding member such that the jetting direction of the cleaning liquid is a direction more upward-trending than the horizontal direction.

7. The sensor unit according to any one of claims 4 to 6,
wherein the holding member is attached to the housing such that the air jetted from the first nozzle and the cleaning liquid jetted from the second nozzle flow from an inner side toward an outer side of the vehicle.

8. The sensor unit according to any one of claims 4 to 7,
wherein the first surface to be cleaned has a horizontally long rectangular shape, and
wherein the holding member is attached to the housing such that the first nozzle and the second nozzle are disposed along a short side of the first surface to be cleaned.

9. The sensor unit according to claim 3 or 8,
wherein the cleaner includes a plurality of the first nozzles arranged in parallel along the short side.

10. The sensor unit according to any one of claims 1 to 9, further comprising:
a camera disposed below the LiDAR,
wherein the cleaner further includes a third nozzle capable of jetting at least one of the air and the cleaning liquid at a second surface to be cleaned corresponding to the camera.

11. A sensor unit to be mounted on a vehicle, the sensor unit comprising:
a LiDAR;
a camera including a light receiving portion; and
a housing configured to accommodate the LiDAR and the camera,
wherein the camera includes a transmissive cover that is disposed between a design surface of the housing forming a vehicle external appearance and the light receiving portion and has an infrared light cut filter function of cutting infrared light.

12. The sensor unit according to claim 11,
wherein the transmissive cover is disposed in a recess formed in the design surface.

13. The sensor unit according to claim 11 or 12, further comprising:
a cleaner having a nozzle that jets a cleaning medium at the transmissive cover.
